Europäisches Patentamt

European Patent Office

Office européen des brevets

(11) Publication number: **0 079 225**
**A2**

## EUROPEAN PATENT APPLICATION

(21) Application number: 82305921.7

(22) Date of filing: 05.11.82

(51) Int. Cl.³: **C 08 L 57/00**
**A 01 M 23/00**

(30) Priority: 05.11.81 US 318650

(43) Date of publication of application:
18.05.83 Bulletin 83/20

(84) Designated Contracting States:
AT CH DE FR GB IT LI NL

(71) Applicant: SOUTHERN MILL CREEK PRODUCTS CO. INC.
5414 N. 56th Street
Tampa Florida 33601(US)

(72) Inventor: McGinn, Martin W.
2312 Ardson
Tampa Florida 33609(US)

(72) Inventor: Tucker, Dale L.
7414 Whitehouse Drive
Riverview Florida 33569(US)

(74) Representative: Bizley, Richard Edward et al,
BOULT, WADE & TENNANT 27 Furnival street
London EC4A 1PQ(GB)

(54) Composition and trap for capturing vermin.

(57) An effective composition for the capture of rodents, rats, mice, and other vermin, harmless to man and pets and useful over a wide range of temperatures, may be produced by forming a mixture including: a tackifying solution comprising either a low molecular weight linear polymer or a high molecular weight branched polymer, a solvent type softener, and a resinous substance which comprises an alkyl ester of rosin such as a methyl ester and one or more resins such as hydrogenated resins, aromatic hydrocarbon resins or the like, with the tackifying solution making up at least 86% by weight of the mixture; a coagulated and polymerized rubber such as polyisoprene, making up at least .125% by weight of the mixture and being reacted with the tackifying solution; and an aqueous emulsion of a rubber such as polyisoprene and including a stabilizer such as ammonia, which makes up at least 6% by weight of the mixture, the emulsion being dispersed in said tackifying solution. The invention also teaches that a vermin trap may be produced by loading such a composition into a tray.

FIG I

## COMPOSITION AND TRAP FOR CAPTURING VERMIN

The present invention relates to a glue composition which may be used in disposable rodent and vermin traps and particularly for use in traps for capturing mice and rats.

As is well known, vermin such as rats and mice, among others, multiply at a very rapid rate and it is important to be vigilant in their detection and to take immediate steps to eliminate them before they have an opportunity to breed and multiply. This is particularly important in food storage, processing, preparation and serving areas. Inasmuch as most pesticides or rodenticides take several days to a week or more to kill, they are less than satisfactory in the prevention of increased infestation. Moreover, it is obviously undesirable to employ poisonous materials in such food areas or where children, pets, desirable animals or even adults may possibly be harmed by them. Another serious disadvantage of poisons and the like is that the poisoned pest or vermin, a mouse for example, tends to crawl off into an inaccessible hiding place to die, decay and produce a distressing odour problem which is difficult or impossible to eliminate. For these and other reasons attempts have been made to entrap vermin such as mice and rats in such a way that the disadvantages of the uses of poison are avoided and the opportunity for the vermin to hide in an inaccessible place is eliminated.

In an attempt to solve the problems presented by poisons and mechanical traps, a number of attempts have been made to provide glue traps wherein the rodents or vermin become entangled and are caught alive and cannot escape. One such attempt is disclosed and described in U.S. Patent No. 3,864,866. This patent discloses a device for trapping rodents and other vermin which uses two panels and a non-drying adhesive disposed on one surface of each of the panels. In use the panels are separated and used independently of each other. The adhesive used and disclosed by this patent is a non-drying and non-hardening material manufactured with 60% by weight linseed oil and 40% by weight resin. While such traps and compositions as disclosed in U.S. Patent No. 3,864,866 may catch or capture some rodents or vermin, it is unlikely they will capture and retain significant numbers of such rodents or vermin. Such an adhesive is likely to be effective over only a narrow range of temperatures and will not have sufficient tackiness or the elasticity and cohesiveness to hold and retain rodents or other vermin which comes into contact with it. Adhesive traps such as that shown in U.S.Patent No. 3,864,866 and other adhesives sold by such companies as J.T. Eaton and Company, Inc. of Twinsburg, Ohio have failed or proved inadequate in several ways.

It has been found, for example, that when a rodent or other vermin approaches an adhesive trap that a considerable surface area of the rodent or vermin is available to the adhesive by virtue of the many hairs on the rodent's body. This surface area is not aligned to the plane of the adhesive so that when the adhesive comes into contact with a given surface area and the rodent attempts to escape, the phenomenon of peel stress determines whether the rodent or other vermin will be able to extricate himself from the glue or adhesive. In other words, the rodent or other vermin will attempt to peel its appendages, its feets or its hair, from the surface of the adhesive. Therefore, effective capture of the rodent or other vermin requires an adhesive which is resistant to peel stress.

It has been found that two factors predominate in determining peel strength, i.e. the cohesive strength of the adhesive and the adherence of the adhesive to a maximum amount of surface area. In order to maximize the amount of surface area in contact with the adhesive, it is necessary to have more involvement of the rodent or vermin, i.e., it must move about to cause more surface area to come into contact with the adhesive. In order for this to occur without escape of the rodent or other vermin, it is necessary for the adhesive to deform in a somewhat elastic manner. Prior adhesives such as that utilized by U.S. Patent No. 3,864,866 and by Eaton have experienced a high instance of cohesive failure upon extreme deformation or an inability to deform sufficiently so as to significantly allow a rodent or other vermin enough movement to increase the available surface area. This latter is particularly the case in the instance of the rodent glue presently marketed by J.T. Eaton and Company, Inc. In addition, many adhesives that are presently being marketed typically become, at temperatures frequently encountered in the warmer climates or in localized areas in a building such as attics and the like, too fluid and therefore less effective in capturing a rodent or other vermin in the first place. Furthermore, such excess fluidity makes such glues or adhesives inconvenient to use.

For the reasons set forth above, compositions and glue traps were still unavailable before this present invention which were capable of effectively capturing rodents and other vermin.

This invention thus aims to provide a composition which is (a) effective in capturing vermin of various sizes and maintaining them without permitting escape once they have been captured, (b) capable of exhibiting a high efficiency over a prolonged period of time and a wide range of temperatures, and (c) harmless to man and to pets and which has a minimum fluidity under a wide range of temperatures and which can be used wherever rodents and other vermin are found without restriction.

The present invention provides a composition for capturing rodents and other vermin which comprises a mixture of a tackifying solution which comprises a polymer which may be either a low molecular weight linear polymer or high molecular weight branched polymer, a resinous substance consisting of an alkyl ester of rosin such as a methyl ester and one or more other resins such as hydrogenated resins, aromatic hydrocarbon resins or the like, and a solvent type softener, which are mixed together to form a true solution, and the tackifying solution comprises at least 86% of the composition by weight. The composition also includes a coagulated and polymerized rubber which may be polyisoprene which makes up at least .125% by weight of the composition and this rubber is reacted with the tackifying solution. The composition also includes an aqueous emulsion of rubber such as polyisoprene and an ammonia stabilizer which makes up at least .875% by weight of the composition and this emulsion is dispersed within the tackifying solution, for example, after it is reacted with the coagulated and polymerized rubber.

The composition of the invention must have a Stormer viscosity, at 25°C. greater than 110,000 cps. and a rolling bottle tack factor of 2 centimetres or less when conducted at 25°C. as indicated by the rolling bottle test which will be described in greater detail hereinbelow. The composition should also have a softening test factor no greater than 4 centimetres at a temperature of 55°C. when conducted as described hereinbelow in more detail, and a deformation or strand test factor of at least 3 centimetres when subjected to said test as described hereinbelow. Finally, the composition must have elastic properties such that if a surface is placed firmly in the adhesive and a strand is pulled to the point of cohesive failure, i.e., rupture of the strand of adhesive, the strand will reform or retract to at least half of its extended length at the time of rupture or cohesion failure.

In order to prepare the composition for testing it is necessary to provide a tray with a layer of the composition of 3 to 6 millimetres in thickness and to permit the tray to cool to the testing temperatures.

In preparation for the tack test a clean, clear glass bottle weighing 113.0 grams, having a 4.5 centimetre outer diameter and having a cylindrical surface of 7.6 centimetres in height is calibrated on the inside circumference of the bottle in 0.5 centimetre units. This bottle is carefully placed onto the surface of the tray containing they layer of the glue composition of the invention with the zero reference line at the centre of the area contacting the glue. This bottle and the tray containing the glue are all utilized in performing the tack test, the softening test and the deformation test as set forth hereinbelow.

In order to conduct the tack test, after the bottle is placed in contact with the surface of the glue contained by the tray, the tray is placed at an angle of 45 degrees to the horizontal plane and permitted to stand for a period of five minutes at a temperature of 25°C. At the expiration of the five minute period the circumferential distance that the bottle has travelled is observed and measured using the calibrated inner circumferential measurements as noted above. In a satisfactory glue the circumferential distance travelled in this test must be no greater than 2.0 centimetres.

The same bottle and the same tray of glue composition is also utilized in performing the softening test. The bottle is again returned to the zero reference point after having been cleaned and the tray is again placed at an angle 45 degrees from the horizontal plane in an oven maintained at a temperature of 55°C. for a period of 15 minutes. Again, the resulting circumferential distance travelled is observed and measured. This distance must be no greater 4.0 centimetres.

In order to test the deformation or strand forming characteristics of the composition, a tray of glue is prepared as noted above and the same bottle is place on to the tray surface and maintained at a temperature of 25°C. The bottle is gently rolled for a distance of at least 2 cm. of its outer circumferential surface as noted in the above examples and then the bottle is slowly lifted from the surface of the glue while the tray is held firmly in place. Lifting the bottle in this manner should peel a uniform sheet of glue from the surface of the glue which will separate into strands extending along the length of the bottle's circumference. These strands should attain a minimum of 3.0 centimetres in length before there is significant cohesive failure of said strands, that is, before more than one-third of such strands rupture or break. Therefore, the composition to be acceptable must have a deformation factor of at least 3.0 centimetres. As noted above, the composition must also have elastic properties so that when a surface is placed firmly in the adhesive and a strand of glue is pulled to the point of cohesive failure or rupture the strand will retract and reform to a distance that is less than half of its length at the point of rupture.

A further characteristic which must be possessed by the glue composition in order to permit it to be packaged and handled during normal temperatures, i.e. within the range of 32°F. and 145°F., is to test the flowing characteristics of the composition. This test is performed again by forming a layer of the composition in a tray of 3 to 6 millimetres in thickness and placing the tray on its edge, perpendicular to the horizontal plane and subjecting it to a temperature of up to 145°F. for a period of 30 minutes after which the thickness of the layer of the composition is again measured and must not have changed during the period of this test in order for the glue to be acceptable.

In summary, an acceptable composition must have a tack test factor of not more than 2.0 centimetres, a softening test factor of not more than 4.0 centimetres, a deformation or strand test factor of at least 3.0 centimetres and an elastic recovery of at least one-half if its ruptured length.

The polymers used in forming the tackifying solution can be a low molecular weight linear polymer or high molecular weight branched polymer. Examples of suitable polymers are polyisobutylene, polyethylene and polyacrylate. However, polyethylene is preferred. Examples of resinous substances useful in making the tackifying solution are alkyl esters of rosin, preferably the methyl ester of rosin and a combination of one or more resins selected from a group consisting of hydrogenated resin, aliphatic hydrocarbon resin, terpene resin or petroleum resin. Of this group aliphatic hydrocarbon resins or terpene resins are preferred.

Examples of softeners which can be used in the tackifying solution are epoxidized oil, paraffin distillates, pale oil, mineral oil and other similar types of oil. However, pale oil and mineral oil are preferred both from an economic and effectiveness standpoint.

Examples of rubbers useful in the composition of the invention are polyisoprene, polychloroprene, and isobutylene/isoprene copolymers. The composition will also include a stabilizer, e.g. an ammonia stabilizer such as ammonium hydroxide, which serves to stabilize the aqueous emulsion of the rubber in the composition.

Examples of the tackifying resins are disclosed in Table I which gives the trade names they are sold under and the source where such resins can be obtained and other characteristics of these resins which is useful in determining their utility in the compositions of the invention.

## TABLE I

### TACKIFYING RESINS

| NAME OF SUBSTANCE | TRADEMARK | SOFTENING DEGREE | AVERAGE MOLECULAR WT. |
|---|---|---|---|
| Alkyl Ester of Resin | Abylan(1) | 25° | 1000 |
| Hydrogenated Resin | Escorez 5300(2) | 105°C | 5300 |
| Terpene Resin | Wingtach 115(3) | 115°C | 1400 |
| Petroleum Resin | Escorez 1304(2) | 103°C | 1450 |
| Aliphatic Resin | Piccopale 100(1) | 100°C | 1400-2000 |

(1)  Hercules, Inc., Wilmington, Delaware
(2)  Exxon Chemical Co., Houston, Texas
(3)  Goodyear Chemical Co., Akron, Ohio

Table II gives examples of polymers useful in the invention and the trade names under which they are sold and the sources where they might be purchased. Table II also gives the average molecular weight of the polymers.

TABLE II

POLYMERS

| NAME OF SUBSTANCE | TRADEMARK | AVERAGE MOLECULAR WT. |
|---|---|---|
| Polyethylene | Polyethylene AC-6(1) | 6000 |
| Polyisobutylene | Vistanex LM-MH(2) | 50,400-55,800 (Flory) |
| Polyacrylate | Acryloid 6610(3) | 6600 |

(1) Allied Chemical Co., Morristown, New Jersey
(2) Exxon Chemical Co., Houston, Texas
(3) Rohm & Haas Co., Philadelphia, Pennsylvania

Table III illustrates examples of solvent-type softeners useful of the invention and gives the trade names under which they are sold and the names of the companies which sell such products under these trade names.

TABLE III

SOLVENT TYPE SOFTENER

| NAME OF SUBSTANCE | TRADEMARK OR TRADENAME | API° |
|---|---|---|
| Paraffin Distillates | Para Flux (1) | 29 |
| Pale Oil | Pale Oil 100 (2) | 25 |
| Mineral Oil | Mineral Seal Oil (2) | 43 |
| Epoxidized Oil | Paraplex G-62 (3) | 60 |

(1) C.P. Hall Co., Chicago, Illinois
(2) Whitaker Oil Co., Atlanta, Georgia
(3) Rohm & Hass Co., Philadelphia, Pennsylvania

Table IV lists examples of rubbers useful in the composition of the invention and gives the trade names under which such rubbers are sold and lists the sources where such rubbers may be obtained.

TABLE IV

RUBBERS

| NAME OF SUBSTANCE | TRADEMARK | MANUFACTURER |
|---|---|---|
| Polyisoprene | Paratol D 143 | Testworth Laboratories, Inc. Columbia City, Indiana |
| Polychloroprene | Neoprene G | Exxon Chemical Co. Houston, Texas |
| Isobutylene/ isoprene copolymers | Exxon Butyl Rubber 65 | Exxon Chemical Co. Houston |

TABLE V   (Figures in brackets denote parts by weight)

| FORMULA NO. | TACKIFYING RESIN | POLYMER | SOFTENER | RUBBER | WATER | STABILIZER |
|---|---|---|---|---|---|---|
| 1 | Methyl Ester of Rosin (23.8)<br>Hydrogenated Resin (42.2) | Polyisobutylene (4.7) | Epoxidized Oil (50.5) | Neoprene (19 | (3.35) | (.15) |
| 2 | Methyl Ester of Rosin (4.9)<br>Terpene Resin (Solid) (8.7)<br>Terpene Resin (Liquid) (5.2) | Polyethylene (1.3) | Pale Oil (5.2) | Polyisoprene (1) | (.95) | (.15) |
| 3 | Methyl Ester of Rosin (5.2)<br>Petroleum Resin (14.3) | Acryloid (1.4)<br>Polyisobutylene (1.4) | Epoxidized Oil (8.6) | Butyl Rubber (1) | (.85) | (.15) |
| 4 | Methyl Ester of Rosin (4.9)<br>Aliphatic Resin (8.7) | Polyethylene (1.3) | Mineral Oil (10.4) | Polyisoprene (1) | (.95) | (.15) |

0079225

-15a-

Table V lists four formulations of the composition of the invention and gives the amounts of each element present within the composition.  The compositions set forth in Table V were manufactured in accordance with the following procedure.  The process constituted by the general steps of the procedure, and illustrated by the detail, is included in the invention.

A steam jacketed mixing unit or kettle is charged with the alkyl ester of rosin and the polymer. The temperature of the rosin and the polymer is raised to a temperature of between 250° and 350°F. with continuous stirring and mixing. When the mixture reaches a temperature of 250°F. all heat input into the mixing unit is cut off. After the mixture of rosin and polymer has attained the temperature within the desired range, the resins are added slowly to the mixture thereby lowering the temperature of the mixture to a temperature of 200°F. All of the resin must be melted and the mixture must be of uniform texture with no crystals present. It will take approximately 30 to 45 minutes to attain this state at temperature ranges of between 200°-225°F.

After the resins are added to the mixture the softener is added thereto and stirred and mixed with the mixture without applying additional heat thereto until the temperature of the solution drops to at least about 180°F. When this temperature is reached or the mixture drops below 180°F, rubber and water as a latex dispersion is added to the solution with continuous mixing and stirring which results in lowering the temperature to between 160° and 170°F. The composition is mixed and stirred for an additional five minutes while maintaining its temperature between 150° and 160°f.

Alternatively, all of the softener and a portion of the rubber can be added when the mixture is at a temperature of between 200° and 225°F. and mixed until all of the rubber added is coagulated and polymerized and the entire solution or mixture is cooled to 150°F. at which point the latex mixture can be added and mixed with the composition for a period of five minutes and thereafter the composition may be packaged.

In all cases in the above process, packaging of the composition must take place within two hours from the beginning of the mixing process. If the composition is maintained at the packaging temperature of 150° to 160°F. over two hours it will deteriorate and the desired results will not be obtained. The polymer, softener, and resin tackifying solution may be manufactured at any temperature which is sufficient to insure complete melt and plastification of the polymer. This results in a true solution at the molecular level. This solution must be cooled before adding the rubber and the water. The degree of cooling is critical in order to control the amount of coagulation and polymerization of the rubber. The temperature at which the rubber is added is dependent upon the mixing time desired and the total percentage of rubber solids (by weight based on the total weights of the composition) added. In general, higher temperatures and/or mixing times require lower amounts of rubber solids.

As pointed out hereinbefore, the rubber is dispersed in water and stabilized with an electron donor such as ammonium hydroxide. The amount of stabilizer is usually between 0.15% to 0.20% by weight of the total weight of the rubber in the composition. The interdependence of the temperature at which the rubber is added, the length of time of mixing, the amount of water, and the amount of rubber is dictated by the requirement that at least 0.125% and usually up to 2.0% (by weight based on the total composition) be coagulated and polymerized rubber as determined by the coagulation test discussed hereinbelow and that at least 0.875% and usually up to 6.0% (by weight of the total composition) be rubber in the form of a stable dispersion. If the amount of rubber coagulated is too low, a loss in cohesive strength as concerns shear and peel stress will be found to occur. If the amount of rubber coagulated is too high, a loss in tack will be found to occur. If the amount of rubber in dispersed form is too low, a loss in viscosity will occur. It is this critical balance that gives the composition of the invention its superior deformation and elastic characteristics.

In order to determine the percentage of rubber coagulated, it is necessary to remember that when rubber is dispersed and stabilized in water and added to the tackifying solution at temperatures below 150°F., essentially all of the rubber remains in a dispersed form in the adhesive or tackifying solution resulting in an opaque, graying appearance. When the latex is added at a temperature higher than 150°F. and allowed to coagulate completely a translucent material results. Based on this phenomena, the invention includes a newly devised method which may be used to determine the amount of rubber in coagulated form and the amount of the rubber that is present in dispersed form in the glue composition of the invention.

This method requires a sample of the adhesive which has been cooled to approximately 150°F. to be poured into a semi-micro disposable cuvette. Samples of the adhesive or glue composition that contain 100% coagulated rubber and 100% dispersed rubber are similarly poured into cuvettes. A spectrophotometer is used to measure the light absorbance of the glue composition. The sample which contains 100% of coagulated rubber is used to set the zero point and the sample containing 100% of dispersed rubber is read, that is the light absorbance of the composition is measured. Measurements are made at the minimum light absorbance level for the zero standard which can be determined by scanning the sample with the spectrophotometer. Generally a reading of 600 nanometers will be found to be adequate for measurements. The light absorbance of the unknown sample is then measured by the spectrophotometer and the percentage rubber in dispersed form is calculated as follows:

% dispersed rubber =

$$\frac{\text{Light absorbance of unknown composition}}{\text{Light absorbance of 100\% dispersed samples}} \times$$

% of total rubber by weight in composition

% coagulated rubber = % total rubber - % dispersed rubber.

In general, measurements are made on samples with only small amounts of rubber coagulated and polymerized. Therefore in formulations where an adhesive sample containing all of its rubber in dispersed forms reads (when the instrument is zeroed as noted above) 2 absorbance units (or close to that value), the method is inadequate to test the sample.

Table VI gives the test results of the four Examples of Table V when these compositions were subjected to the rolling bottle tack test, rolling bottle softening test and rolling bottle deformation test and the elasticity test as described hereinabove when such compositions were manufactured in accordance with the above-identified method.

TABLE VI

TEST RESULTS

| FORMULA NO. | TACK FACTOR | SOFTENING FACTOR | DEFORMATION FACTOR | ELASTIC RECOVERY FACTOR | FLOW FACTOR |
|---|---|---|---|---|---|
| 1 | 2.0 cm | 2.0 cm | 3.0 cm | Greater than 50% | No Flow |
| 2 | 1.0 cm | 1.5 cm | 3.0 cm | Greater than 50% | No Flow |
| 3 | 1.5 cm | 1.5 cm | 3.0 cm | Greater than 50% | No Flow |
| 4 | 2.0 cm | 2.0 cm | 3.4 cm | Greater than 50% | No Flow |

It has also been found that the capturing efficiency of the above-described composition can be greatly enhanced by adding thereto aromatic ingredients of several varieties. The following flavours and fragrances have been found to cause the composition to have increased effectiveness in capturing rodents, vermin and the like. Examples of these ingredients are pineapple flavour, pineapple fragrance, maple flavour, maple fragrance, cheese fragrance, butter vanilla flavour, peanut butter flavour. It has been found that these substances can be added to the composition disclosed above and claimed herein without modifying the essential characteristics of the composition of the invention.

After the composition is manufactured it must be packaged within two hours from the beginning of the manufacturing process. This packaging can take place in bulk containers such as gallon cans for use in exterminators and the like, or it can be packaged in preformed trays for use by either the exterminators or the ultimate consumer. A method of preparing such trays is disclosed and illustrated in the accompanying drawings. A tray, ultizing the novel composition of the invention disclosed hereinabove, and a method of filling the trays with the novel composition will now be described in detail in conjunction with the accompanying drawings, in the several figures of which like reference numerals identify like elements.

In the drawings:-

Figure 1 is a perspective view of a tray filled with the novel composition of the invention;

Figure 2 is a schematic plan view of a production line for filling trays with the novel composition of the invention;

Figure 3 is a schematic from elevation taken along line III-III of Figure 2; and

Figure 4 is a schematic side elevation of a portion of the production line shown in Figure 2, taken along line IV-IV of Figure 2.

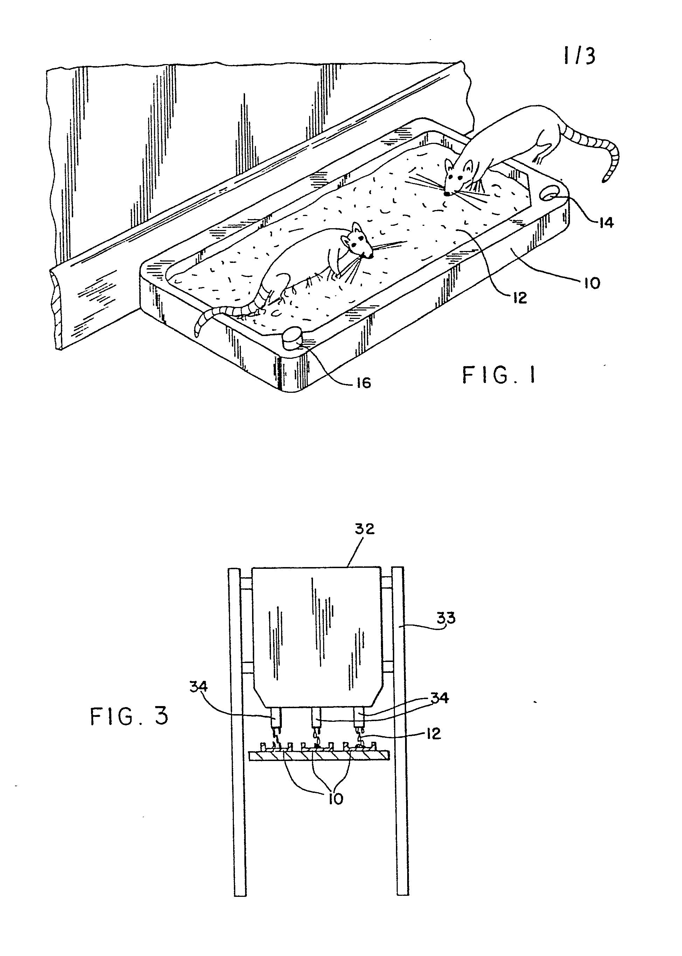

Referring now to Figure 1, there is depicted a trap for capturing rats, mice, rodents and other vermin using the novel composition of the invention. This trap comprises a plastic tray 10 which is filled with the glue composition 12 of the invention. Each tray 10 is provided with a locking depression 14 and a locking projection or lug 16. After trays 10 are filled with glue 12 and the glue is cooled below its flowing temperature, two of said trays are packaged with their open surfaces facing each other so that projection or lug 16 of one tray engages in depression 14 of the other tray and vice versa and the two are wrapped in this position. Each package may contain two or more trays if desired for marketing purposes.

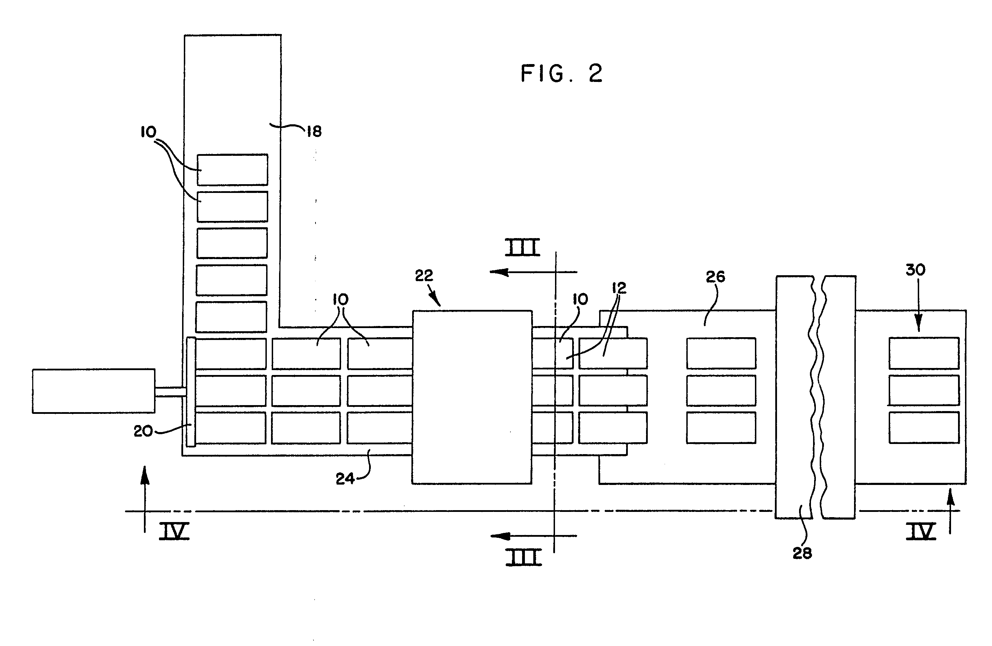

Referring now to Figures 2, 3 and 4, one method of filling trays 10 with glue 12 is shown schematically. Trays 10 are placed in tray chute 18 manually and are deposited onto a stationary tray filling station support 24 which extends through a filling station 22. Three trays are deposited onto support 24 at a time by the operator pushing the trays along chute 18 onto the support.

A reciprocating tray pusher 20 operates periodically to push the trays on support 24 a distance equal to one tray length, intermittently. All of the trays on support 24 dwell in filling station 22 long enough to be partially filled with a predetermined quantity of glue 12 and are ultimately pushed onto a continuously moving conveyor belt 26 in spaced relation to preceeding and succeeding trays. Conveyor belt 26 carries the partially filled trays through a suitable cooling station 28, where glue 12 is cooled to a temperature lower than the temperature at which said glue flows under normal conditions expected to be encountered during use. After leaving the cooling station the trays are packaged manually, in pairs, with the open sides of the trays facing each other as noted above.

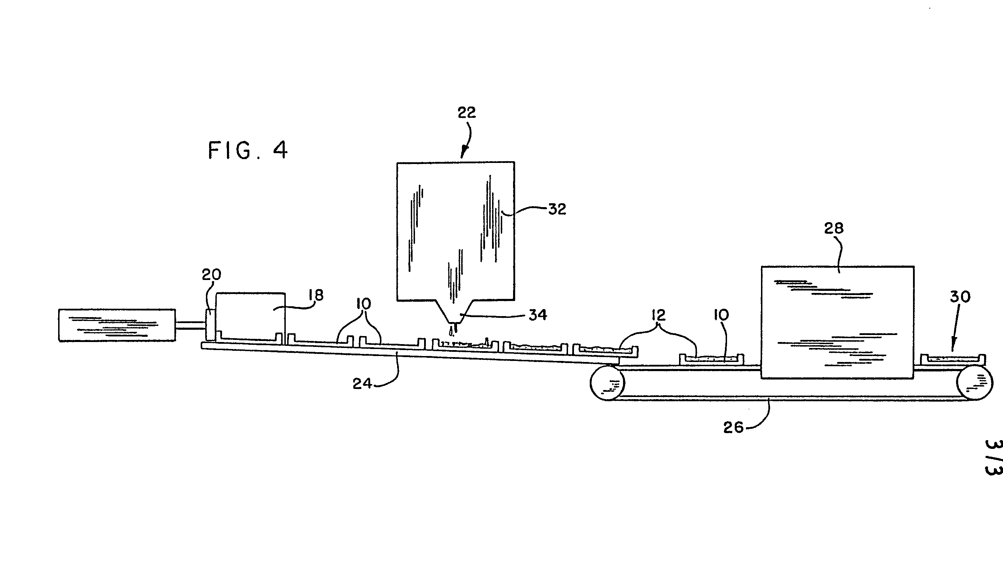

Referring now more specifically to Figures 3 and 4, it will be noted that tray support 24 is supported at a slight angle to the horizontal plane which assists in the even distribution of glue 12 in tray 10 at filling station 22. However, this angle should not be great enough to cause trays 10 to be moved along support 24 by the force of gravity. If the angle is too great the trays would not remain stationary during filling.

Filling station 22 comprises a glue kettle 32 which contains a suitable supply of glue 12. Kettle 32 is heated to maintain the glue 12 at a temperature higher than its melting point so that it will flow readily through dispensing nozzles 34 into trays 10. Kettle 32 is supported by a suitable frame 33 and nozzles 34 are opened periodically, in timed relation to pusher 20, to dispense a predetermined quantity of glue 12 into each tray 10, to partially fill it.

CLAIMS:

1.  A composition for the capture of rodents and other vermin comprising a mixture including :

(I)   a tackifying solution constituting at least 86% by weight of the mixture and comprising:

    A.   a polymer which is a low molecular weight linear polymer or a high molecular weight branched polymer;

    B.   a solvent type softener;

    C.   a resinous substance comprising:

        (1)   an alkyl ester of rosin and,

        (2)   one or more resins selected from hydrogenated resins, aliphatic hydrocarbon resins, terpene resins, and petroleum resins;

(II) a coagulated and polymerized rubber selected from polyisoprene, polychloroprene, and isobutylene/ isoprene copolymers, constituting at least .125% by weight of the mixture and reacted with the tackifying solution; and

(III) an aqueous emulsion of a rubber selected from polyisoprene, polychloroprene, and isobutylene/ isoprene copolymers, and a stabilizer, preferably ammonium hydroxide, the emulsion being dispersed in the tackifying solution and constituting at least .875% of the mixture by weight.

2.    A composition as claimed in claim 1, wherein the alkyl ester of rosin is a methyl ester of rosin.

3.    A composition as claimed in claim 1 or claim 2, wherein the resin(s) is/are present in an amount of from 1.77 to 2.9 parts per one part of the alkyl ester rosin.

4.    A composition as claimed in any one of claims 1 to 3, wherein the tackifying solution constitutes from 86% to 98% by weight of the mixture.

5.    A composition as claimed in any one of claims 1 4, wherein the tackifying solution comprises one part of the polymer, 4 to 8 parts of the softener, and 10 to 14 parts of the resinous substance.

6.    A composition as claimed in any one of claims 1 to 5, wherein the coagulated and polymerized rubber constitutes from .125% to .375% by weight of the mixture.

7.    A composition as claimed in any one of claims 1 to 6, wherein the aqueous emulsion of rubber constitutes from .875% to 6% of the mixture by weight.

8.    A composition as claimed in any one of claims 1 to 6, wherein the aqueous emulsion of rubber constitutes from 2.625% to 2.75% by weight of the mixture.

9.    A composition as claimed in any one of claims 1 to 8, wherein the aqueous emulsion of rubber comprises 1 part ammonia, from 500 to 875 parts of the rubber, and from 100 to 7,000 parts of water.

10. A vermin trap comprising a tray containing a composition as claimed in any one of claims 1 to 9.

AUSTRIAN CLAIMS:

1. A method of manufacturing a composition for the capture of rodents and other vermin comprising mixing:-

(A) a polymer which is a low molecular weight linear polymer or a high molecular weight branched polymer;

(B) a solvent type softener;

(C) an alkyl ester of rosin;

(D) one or more resins selected from hydrogenated resins, aliphatic hydrocarbon resins, terpene resins, and petroleum resins;

(E) at least one rubber selected from polyisoprene, polychloroprene, and isobutylene/isoprene copolymers;

(F) a stabilizer, preferably ammonium hydroxide; and

(G) water;

which mixing is effected to produce a mixture in which ingredients (A), (B), (C) and (D) form a tackifying solution, a rubber (E) being reacted with the tackifying solution to become coagulated and polymerized and the same or a different rubber (E) is in the form of an aqueous emulsion including the stabilizer and dispersed in the tackifying solution, and in which the tackifying solution constitutes at least 86% by weight of the mixture, the coagulated and polymerized rubber (E) constitutes at least .125% by weight of the mixture and the aqueous emulsion constitutes at least .875% by weight of the mixture.

2. A method as claimed in claim 1, wherein the alkyl ester of rosin is a methyl ester of rosin.

3. A method as claimed in claim 1 or claim 2, wherein the resin(s) is/are present in an amount of from 1.77 to 2.9 parts per one part of the alkyl ester of rosin.

4. A method as claimed in any one of claims 1 to 3, wherein the tackifying solution constitutes from 86% to 98% by weight of the mixture.

5. A method as claimed in any one of claims 1 to 4, wherein the tackifying solution comprises one part of the polymer, 4 to 8 parts of the softener, and 10 to 14 parts of the resinous substance.

6. A method as claimed in any one of claims 1 to 5, wherein the coagulated and polymerized rubber constitutes from .125% to .375% by weight of the mixture.

7. A method as claimed in any one of claims 1 to 6, wherein the aqueous emulsion of rubber constitutes from .875% to 6% of the mixture by weight.

8. A method as claimed in any one of claims 1 to 6, wherein the aqueous emulsion of rubber constitutes from 2.625% to 2.75% by weight of the mixture.

9. A method as claimed in any one of claims 1 to 8, wherein the aqueous emulsion of rubber comprises 1 part ammonia, from 500 to 875 parts of the rubber, and from 100 to 7,000 parts of water.

10. A method of making a vermin trap comprising preparing a composition for the capture of rodents and other vermin by effecting a method as claimed in any one of claims 1 to 9 and loading the resulting composition into a tray.

0079225

1/3

FIG. 1

FIG. 3

FIG. 2

FIG. 4

0079225